# EUROPÄISCHE PATENTSCHRIFT

(11) **EP 1 761 760 B1**
(45) Veröffentlichungstag und Bekanntmachung des Hinweises auf die Patenterteilung: **25.02.2015**
(21) Anmeldenummer: 05726507.6
(22) Anmeldetag: 26.04.2005
(51) Int. Cl.: G01N 27/04, F01N 11/00, G01N 15/06

(54) **VERFAHREN, PARTIKELSENSOR UND PARTIKELSENSORSYSTEM ZUR MESSUNG VON PARTIKELN**
METHOD, PARTICLE SENSOR, AND PARTICLE SENSOR SYSTEM FOR MEASURING PARTICLES
PROCEDE, CAPTEUR DE PARTICULES, ET SYSTEME DE DETECTION DE PARTICULES POUR MESURER DES PARTICULES

(30) Priorität: 18.06.2004 DE 102004029523
(43) Veröffentlichungstag der Anmeldung: 14.03.2007
(73) Patentinhaber: ROBERT BOSCH GMBH, 70442 Stuttgart (DE)
(72) Erfinder: SCHMIDT, Ralf, 70839 Gerlingen (DE); SCHITTENHELM, Henrik, 70182 Stuttgart (DE)
(86) Internationale Anmeldenummer: PCT/EP2005/051848
(87) Internationale Veröffentlichungsnummer: WO 2005/124326

(56) Entgegenhaltungen:
- EP-A- 0 525 566
- DE-A1- 3 304 548
- DE-A1- 10 133 384
- US-A- 4 307 061
- PATENT ABSTRACTS OF JAPAN Bd. 009, Nr. 281 (P-403), 8. November 1985 (1985-11-08) & JP 60 123757 A (NIPPON TOKUSHU TOGYO KK), 2. Juli 1985 (1985-07-02)

## Beschreibung

### Stand der Technik

Die Erfindung betrifft ein Verfahren, einen Partikelsensor und ein Partikelsensorsystem zur Messung von Partikeln, insbesondere Rußpartikeln.

Zur Messung von Partikeln, wie beispielsweise Rußpartikeln im Abgas von Brennkraftmaschinen, kann ein Partikelsensor mit einer Vorrichtung zur Detektion von Rußpartikeln im Abgasrohr montiert werden.

Aus der DE 101 33 384 A1 ist ein Sensor bekannt, der aus zwei Trägerelementen besteht, wobei die Trägerelemente interdigitale Elektroden und einen integrierten Heizer aufweisen und miteinander laminiert sind. Die interdigitalen Elektroden dienen zur Messung von Rußpartikeln, wobei die Messung auf einem resistiven Messprinzip basiert: Eine Anlagerung von Partikeln auf der Elektrodenstruktur führt zu einer Leitfähigkeits- oder Impedanzänderung der Fläche zwischen den Kämmen der Elektroden. Aus der Änderung lässt sich die Anlagerung bzw. die Anlagerungsrate der Partikeln ableiten. Nach einer bestimmten Anlagerungsmenge muss der Sensor regeneriert werden, d. h. der Sensor von den angelagerten Partikeln befreit werden. Hierfür heizt der integrierte Heizer den mit Ruß behafteten Sensor, so dass der angesammelte Ruß vollständig abgebrannt wird. Der Sensor befindet sich dann wieder im ursprünglichen Zustand, und eine erneute Anlagerung und Messung von Partikeln werden dadurch ermöglicht.

Ein Nachteil dieser Vorgehensweise ergibt sich dadurch, dass während der Verbrennung keine neue Anlagerung der Partikeln möglich ist. Auch nach der Regeneration kann nicht sofort Ruß wieder angesammelt werden, der Sensor benötigt aufgrund seiner thermischen Trägheit für die Thermalisierung des Sensorelementes mit dem Abgas eine bestimmte Zeit. Da während der Regenerations- und der darauffolgenden Abkühlphase des Sensors kein Ruß angesammelt werden kann, ist der Sensor während dieser Phasen unempfindlich gegenüber einer möglicherweise vorhandenen Rußkonzentration.

DE3304548 beschreibt einen Partikelsensor, der die Partikelkonzentration über die Leitfähigkeitsänderung durch die am Sensor angelagerten Rußpartikel bestimmt. Die Messung muss regelmäßig unterbrochen werden, um die angelagerten Rußpartikel zu entfernen. Hierzu wird in DE3304548 eine Hochspannung an die Elektroden angelegt, um den Ruß abzubrennen. Ähnliche Anordnungen sind auch aus JP123757 und EP0525566 bekannt. Dort erfolgt das Abrennen der angelagerten Rußpartikel durch ein zusätzliches Heizelement. US4307061 beschreibt ebenfalls einen Sensor für Rußpartikel, der Elektroden auf einer nicht-leitenden, katalytisch aktiven Schicht für eine Leitfähigkeitsmessung verwendet. Der angelagerte Ruß wird durch den im Abgas vorhandenen Sauerstoff ohne weitere Regelung katalytisch verbrannt.

### Vorteile der Erfindung

Das erfindungsgemäße Verfahren zur Messung von Partikeln in einem Gasstrom, insbesondere Rußpartikeln, hat den Vorteil, dass zumindest nahezu kontinuierlich eine Signalgröße erzeugt wird. Unempfindliche Phasen gegenüber einer Partikelkonzentration während der Detektion von Partikeln treten nicht mehr auf.

Weiterhin ist ein Sensor zur Messung von Partikeln sowie darauf rückbezogene vorteilhafte Weiterbildungen in den Ansprüchen angegeben.

Der erfindungsgemäße Sensor zeigt einen sehr kompakten Aufbau, so dass seine Anwendung nicht nur im Abgasstrang eines Kraftfahrzeugs, sondern überall dort, wo platzsparend eine Überwachung der Rußkonzentration notwendig oder erwünscht ist, ermöglicht wird.

### Zeichnung

Ausführungsbeispiele der Erfindung werden anhand der Zeichnung und der nachfolgenden Beschreibung naher erläutert. Es zeigen:
Figur 1 ein erstes Ausführungsbeispiel eines Partikelsensors zur Messung von Partikeln in schematischer Darstellung,
Figur 2 ein zweites Ausführungsbeispiel eines Partikelsensors zur Messung von Partikeln ebenfalls in schematischer Darstellung.

### Beschreibung der Ausführungsbeispiele

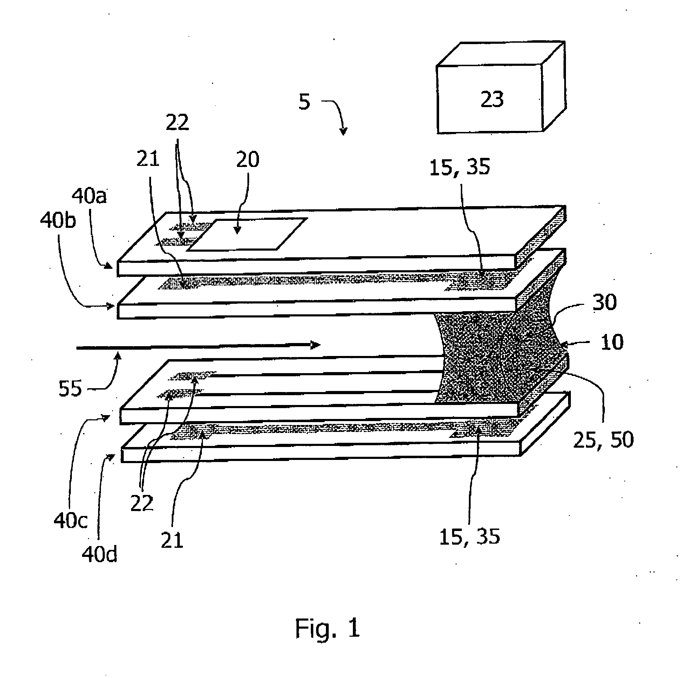

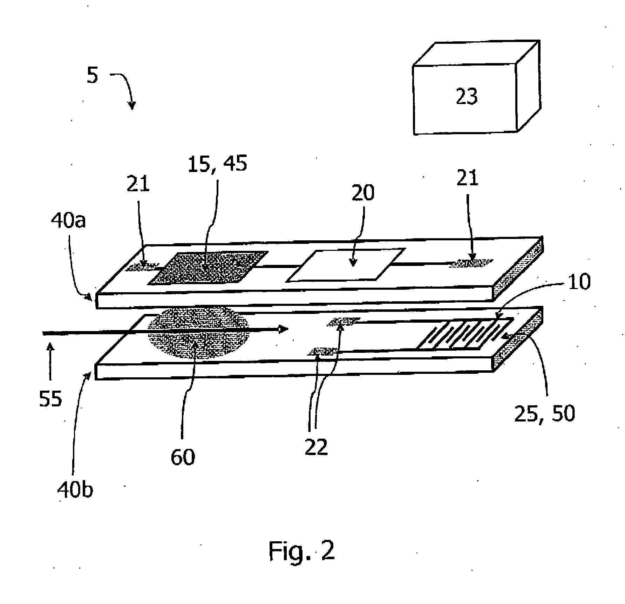

In den Figuren 1 und 2 ist ein Sensor zur Detektion von Partikeln in einem Gasstrom dargestellt, der zum Einbau in einem Abgasstrang eines Kraftfahrzeuges dient und bevorzugt nach einem Rußfilter eine Kraftfahrzeuges mit einem Dieselverbrennungsmotor angeordnet ist. Alternatively kann der Sensor auch vor dem Rußfilter angeordnet sein, um den Rußeintrag in den Filter zu bestimmen.

In einem ersten Ausführungsbeispiel nach Figur 1 weist der Partikelsensor 5 vier Trägerelemente 40a, 40b, 40c, 40d auf. Die Trägerelemente 40a, 40b, 40c, 40d sind parallel zueinander und deckungsgleich übereinander angeordnet, wobei zwischen den beiden mittleren 40b, 40c der vior Trägerelementen 40a, 40b, 40c, 40d ein größerer Abstand vorgesehen ist als im Vergleich zum Abstand der jeweils beiden äußeren 40a, 40b und 40c, 40d der vier Trägerelementen 40a, 40b, 40c, 40d. So sind die Trägerelemente 40a und 40b sowie 40c und 40d miteinander laminiert, während zwischen den Trägerelementen 40b und 40c eine Lücke ("Gap") für den Gasstrom 55 vorgesehen ist. In dieser Beschreibung wird das oberste als das erste 40a, das unterste als das vierte 40d Trägerelement bezeichnet. Die Trägerelemente 40a, 40b, 40c, 40d bestehen aus einem hochisolierenden Werkstoff, beispielsweise aus einer Keramik wie Aluminiumoxid (laminierte Al₂O₃-Folien).

Eine Verbrennungsvorrichtung 15 ist im ersten Ausführungsbeispiel durch eine Entladungsvorrichtung mit zwei Entladungselektroden 35 realisiert. Die beiden Entladungselektroden 35 sind getrennt auf zwei der vier Trägerelementen 40a, 40b, 40c, 40d aufgebracht, beispielsweise auf der Oberseite des zweiten 40b und vierten 40d Trägerelementes wie im Figur 1 dargestellt. Die Oberseite des zweiten 40b Trägerelementes ist dem ersten 40a Trägerelement zugewandt, entsprechend die Oberseite des vierten 40d Trägerelementes dem dritten 40c Trägerelement. Das dritte 40c der vier Trägerelementen 40a, 40b, 40c, 40d ist zwischen den beiden Entladungselektroden 35 angeordnet, und dient als ein Dielektrikum der Entladungselektroden 35. Dies gilt natürlich auch dann, wenn die Entladungselektroden 35 auf der Unterseite der jeweiligen Trägerelemente 40b, 40d angeordnet sind. Über die Kontaktierungen 21 können die Entladungselektroden 35 mit Spannungen beaufschlagt werden, wodurch eine dielektrisch behinderte Entladung (DBE) gezündet wird. Daraus resultiert ein kaltes DBE-Plasma 30.

Eine Messvorrichtung 25 ist auf dem dritten 40c der vier Trägerelemente 40a, 40b, 40c, 40d vorgesehen, und zwar derart, dass die Messvorrichtung 25 gleichzeitig zwischen den beiden Entladungselektroden 35 angeordnet ist. Typischerweise ist die Messvorrichtung 25 auf der Oberseite des dritten Trägerelementes 40c angeordnet und daher für den Ruß aus dem Abgas frei zugänglich. Vorteilhafterweise ist die Messvorrichtung 25 eine interdigitale Kammelektrodenstruktur. In der Figur 1 sind die interdigitalen Kammelektroden 50 durch das DBE-Plasma 30 verdeckt und daher nicht explizit dargestellt, jedoch sind sie in Figur 2 skizziert. Der Bereich der Messvorrichtung 25 definiert den Messbereich 10, an dem sich die zu detektierenden Partikeln anlagern.

Eine Regeleinheit 20 zur Regelung der Teilregeneration durch die Verbrennungsvorrichtung 15 ist auf einem der vier Trägerelementen 40a, 40b, 40c, 40d vorgesehen. Sie kann jedoch bei Bedarf auch außerhalb der vier Trägerelemente 40a, 40b, 40c, 40d in einem Steuergerät 23 angeordnet sein. Auf jeden Fall ist die Regeleinheit 20 über Kontaktierungen 21, 22 sowohl mit der Verbrennungsvorrichtung 15 als auch mit der Messvorrichtung 25 elektrisch verbunden. Die elektrische Verbindung über Kontaktierungen 21, 22 ist aus Übersichtlichkeitsgründen nicht in den Figuren 1 und 2 dargestellt.

Zur kontinuierlichen bzw. quasikontinuierlichen Messung von Partikeln, insbesondere Rußpartikeln, wird der Partikelsensor 5 in einem Gasstrom 55 mit den zu detektierenden Partikeln positioniert, damit sich die Partikeln am Messbereich 10 anlagern. Die am Messbereich 10 angelagerten Partikeln werden von der Messvorrichtung 25, bevorzugt interdigitale Kammelektroden 50, gemessen. Die Anlagerung von Partikeln führt zu einer Leitfähigkeits- oder Impedanzänderung zwischen den Kammelektroden 50.

Nach Messung der angelagerten Partikeln durch die interdigitalen Kammelektroden 50 wird nach bisher bekannten Verfahren der Sensor durch die Verbrennungsvorrichtung 15 totalregeneriert, d. h. der Sensor wird vollständig von allen auf dem Sensor haftenden Partikeln befreit. Im Gegensatz dazu wird vorgeschlagen, statt einer Totalregeneration eine Teilregeneration des Sensors so durchzuführen, dass ein Gleichgewicht zwischen dem durch die Teilregeneration, d. h. durch eine Verbrennung, abgetragenen Ruß und dem neu anlagernden Ruß erreicht wird. Dadurch wird ermöglicht, kontinuierlich oder nahezu kontinuierlich die vorhandene Rußkonzentration bzw. die Anlagerungsrate der Partikeln zu bestimmen. Auf eine Totalregeneration kann verzichtet werden. Es wird ausdrücklich darauf hingewiesen, dass in dieser Schrift unter einer "Verbrennung" allgemein ein Oxidationsvorgang verstanden wird, d. h. auch ein Vorgang ohne eine nennenswerte Temperaturerhöhung wie beispielsweise ein Oxidationsvorgang durch ein sogenanntes "kaltes Plasma" zählt hierzu.

Zu einer geregelten Teilregeneration wird die Verbrennungseinrichtung 15 ständig mit einem Regelsignal aus der Regeleinheit 20 versorgt. Das Regelsignal kann ein Strom- oder Spannungssignal sein. Dadurch passt sich die Leistung der Verbrennung kontinuierlich der aktuellen Situation an, so dass die Abtragrate der Partikeln betragsmäßig gleich der Anlagerungsrate entspricht. Zum Halten des angestrebten Gleichgewichts wird bei großen Partikelströmungen der Messbereich 10 des Partikelsensors 5 stärker teilregeneriert als bei relativ kleinen Partikelströmungen.

Die Verbrennungseinrichtung 15 ist in Figur 1 eine Entladungsvorrichtung mit Entladungselektroden 35. Die Verbrennung der angelagerten Partikeln wird hier mittels eines kalten DDE-Plasmas 30 durchgeführt. Der VorLeil bei Verwendung eines kalten DBE-Plasmas 30 ist, dass am Partikelsensor 5 keine thermische Aufheizung auftritt.

Schließlich wird die Signalgröße des Partikelsensors 5 ermittelt. Neben dem Regelsignal aus der Regeleinheit 20 kann die physikalische Größe der Verbrennungseinrichtung 15, die zur geregelten Teilregeneration des Messbereiches 10 führt, als auch die Signalgröße des Partikelsensors 5 herangezogen werden. Im Falle der Entladungsvorrichtung mit Entladungselektroden 35 als Verbrennungsvorrichtung 15 ist die Leistung des DBE-Plasmas 30 eine geeignete Größe.

Um eine möglichst hohe Empfindlichkeit der Messung der Messvorrichtung 25 zu gewährleisten, ist als Regelpunkt, auf den der Messwert der Messvorrichtung 25 über die Teilregeneration geregelt werden soll, der Bereich der sogenannten Perkolationsschwelle vorgesehen. Der Verlauf der Mesewerte der Messvorrichtung 25 zeigt gegen die Anlagerungszeit/Sekunde im Bereich der Perkolationsschwelle eine sprunghafte Änderung, d. h. in diesem Bereich sorgt ein hoher Gradient der Messwerte für eine sensible Messung. Nach Überschreiten der Perkolationsschwelle ergibt eine weitere Anlagerung von Partikeln nur eine kleine Änderung der Messwerte.

nci gleichzeitigem Betrieb der Entladungsvorrichtung zur DBE und der resistiven Messung durch interdigitale Kammelektroden 35 ist darauf zu achten, dass das DBE-plasma 30 die resistive Messung nicht stört oder verfälscht. Eine geeignete Maßnahme ist eine Entkopplung der Frequenzbereiche der beiden Vorrichtungen mittels einer Lock-In Technologie. Beispielsweise wird für die Entladungserzeugung der kHz-Bereich und für die resistive Messung der 100 Hz-Bereich ausgesucht.

Weiter besteht die Möglichkeit, die Teilregeneration und die resistive Messung zeitlich voneinander zu trennen und auf diese Weise Quer- oder Störeinflüsse zu vermeiden. Die beiden zeitlichen Phasen der Teilregeneration und der resistiven Messung können so schnell alternieren, dass eine quasikontinuierliche Messung erreicht wird. Auch ein zyklischer Betriebsmodus mit fest eingestellten Phasen der Teilregeneration und der resistiven Messung kann durchgeführt werden.

Insbesondere bei Verwendung des DBE-Plasmas 30 kann bei konstanter Brennzeit die Einschaltfrequenz des DBE-Plasmas 30 variiert werden, so dass sich die Regenerationsleistung der angelagerten Partikeln in der jeweiligen Zeiteinheit anpasst. Umgekehrt bietet sich auch die Möglichkeit, die Einschaltfrequenz des DBE-Plasmas 30 konstant zu lassen und stattdessen die Pulsweite bzw. Brennzeit des DBE-Plasmas 30 zu modulieren. Schließlich kann sowohl die Einschaltfrequenz als auch die Brennzeit des DBE-Plasmas 30 konstant bleiben, und die Leistung des DBE-Plasmas 30 direkt, beispielsweise über die an den Entladungselektroden 35 angelegten Spannungen, moduliert werden.

In einem zweiten Ausführungsbeispiel nach Figur 2 weist der Partikelsensor 5 zwei Trägerelemente 40a, 40b auf. Beim ersten 40a der beiden Trägerelementen 40a, 40b ist sowohl ein integriertes Heizelement 45 als auch eine Regeleinheit 20 mit den Kontaktierungen 21 vorgesehen. Abweichend hiervon kann die Regeleinheit 20 wieder in einem Steuergerät 23 angeordnet sein, das elektrisch mit dem Sensor 5 verbunden ist. Die elektrische Verbindung ist aus Übersichtlichkeitsgründen nicht in den Figuren 1 und 2 dargestellt. Der Sensor 5 und das Steuergerät 23 bilden zusammen ein Partikelsensorsystem.

Auf der Oberseite, d. h. dem ersten Trägerelement 40a zugewandten Seite des zweiten 40b der beiden Trägerelementen 40a, 40b sind interdigitale Kammelektroden 50 aufgebracht, die wieder über Kontaktierungen 22 mit der Regeleinheit 20 elektrisch verbunden sind. Das Heizelement 45 und die interdigitalen Kammelektroden 50 sind dabei so angeordnet, dass die interdigitalen Kammelektroden 50 dem Heizelement 45 in Abgasströmungsrichtung räumlich nachgeordnet sind.

Der Gasstrom 55 mit den zu detektierenden Partikeln strömt, wie in Figur 2 durch die Pfeilrichtung dargestellt, zuerst durch den Heizerbereich 60. Der Heizerbereich 60 ist der räumliche Bereich, der durch das Heizelement 45 geheizt werden kann. Danach gelangt der Gasstrom 55 zum Messbereich 10, an dem die interdigitalen Kammelektroden 50 angebracht sind. Die im Gasstrom 55 vorhandenen Partikeln lagern sich am Messbereich 55 an. Die auf dem Messbereich 10 haftenden Partikeln werden durch die interdigitalen Kammelektroden 50 gemessen.

Wird über eine Messung der Leitfähigkeits- oder Impedanzänderung des Messbereiches 55 durch die interdigitalen Kammelektroden 50 festgestellt, dass die Anlagerung der Partikeln auf dem Messbereich 10 so weit fortgeschritten ist, dass sich der Messwert 28 der interdigitalen Kammelektroden 50 im Bereich der Perkolationsschwelle befindet, wird dann das Heizelement 45 aktiviert. Innerhalb kurzer Zeit wird der Heizerbereich 60 auf Temperaturen oberhalb der Oxidationstemperatur der Partikeln aufgeheizt. Dabei wird die Verbrennung der im Gasstrom 55 befindlichen Partikeln durch das Heizelement 45 so geregelt, dass gerade alle Partikeln im Gasstrom 55 oxidieren und im Messbereich 10 keine weitere Anhaftung von Partikeln stattfindet. Geregelt wird in dieser Ausführungsform die Heizleistung, Spannungs- oder Stromstärke des Heizelementes 45.

Die wenigen Partikeln, die noch vor Erreichen der Oxidationstemperatur den Heizerbereich 60 durchströmen und kurz später auf dem Messbereich 10 haften bleiben, erfordern keine bzw. nur selten eine Totalregeneration des Partikelsensors 5. Dadurch wird das Signal/Rauschverhältnis vergrößert und die Genauigkeit der Messwerte 28 erhöht.

Statt des Einsatzes eines Heizelementes 45 kann natürlich auch ein DBE-Plasma 30 hier eine Anwendung finden. Dabei kann das DBE-Plasma 30 insbesondere vorhangförmig um den Messbereich 10 mit der Messvorrichtung 25 ausgebildet werden, um nicht auf eine gerichtete Abgasströmung angewiesen zu sein.

## Patentansprüche

1. Verfahren zur kontinuierlichen Messung von Partikeln in einem Gasstrom (55), insbesondere Rußpartilkeln, auf einem Messbereich (10) eines Partikelsensors (5), wobei
- die zu detektierenden Partikeln auf dem Messbereich (10) den Partikelsensor (5) anlagern,
- die angelagerten Partikeln durch eine Teilregeneration des Messbereiches (10) oder die noch im Gasstrom (55) befindlichen Partikeln durch eine Verbrennungsvorrichtung (15) verbrannt werden, wobei
- die Verbrennung der Partikeln durch die Verbrennungsvorrichtung (15) über ein Regelsignal aus einen Regeleinheit (20), die mit einer Meßvorrichtung (25) verbunden ist, so geregelt wird, dass die Menge der auf dem Messbereich (10) haftenden Partikeln konstant bleibt, und
- daraus eine Signalgröße des Partikelsensors (5) ermittelt wird.

2. Verfahren nach Anspruch 1,
**dadurch gekennzeichnet,**
**dass** die Verbrennung der Partikeln derart ausgeführt wird, dass sich der Partikelsensor (5) im Bereich der Perkolationsschwelle befindet.

3. Verfahren nach Anspruch 1 oder 2,
**dadurch gekennzeichnet,**
**dass** eine physikalische Größe der Verbrennungsvorrichtung (15), die zur geregelten Verbrennung der Partikeln führt, als die Signalgröße des Partikelsensors (5) herangezogen wird.

4. Verfahren nach einem der Ansprüche 1 bis 3,
**dadurch gekennzeichnet,**
**dass** die Verbrennung durch eine dielektrisch behinderte Entladung (DBE) oder eine Wärmeeinwirkung der Verbrennungsvorrichtung (15) ausgeführt wird.

5. Verfahren nach Anspruch 4,
**dadurch gekennzeichnet,**
**dass** eine Erzeugung und Betrieb eines DBE-Plasmas (30) und eine Messing durch die Meßvorrichtung (25) bei voneinander unterschiedlichen Frequenzbereichen aufgeführt werden.

6. Verfahren nach Anspruch 4 oder 5,
**dadurch gekennzeichnet,**
**dass** die Leistung eines DBE-Plasmas (30) durch eine variierende Einschaltfrequenz, Brennzeit oder Spannungsversorgung dem Regelsignal entsprechen wird.

7. Partikelsensor (5) zur Messung von Partikeln, insbesondere zur Durchführung eines Verfahrens nach einem der Ansprüche 1 bis 7, wobei ein Messbereich (10) zum Anhaften der zu detektierenden Partikeln, eine Messtvorrichtung (25) und eine Verbrennungsvorrichtung (15) auf einem oder mehreren Trägerelementen (40a, 40b, 40c, 40d) verteilt angeordnet sind,
**dadurch gekennzeichnet,**
**dass** der Partikelsensor (5) eine Regeleinheit (20) zur Regelung der Verbrennung durch die Verbrennungsvorrichtung (15) aufweist, durch die die Menge der auf dem Messbereich (10) haftenden Partikeln konstant gehalten wird.

8. Partikelsensorsystem zur Messung von Partikeln, insbesondere zur Durchführung eines Verfahrens nach einem der Ansprüche 1 bis 7, bestehend aus einem Partikelsensor (5) und aus einem mit dem Partikelsensor (5) elektrisch verbundenen Steuergerät (23), wobei der Partikelsensor (5) einen Messbcreich (10) zum Anhaften der zu detektierenden Partikeln, eine Messvorrichtung (25) und eine Verbrennungsvorrichtung (15) auf einem oder mehreren Trägerelementen (40a, 40b, 40c, 40d) verteilt angeordnet, aufweist,
**dadurch gekennzeichnet,**
**dass** das Steuergerät (23) eine Regeleinheit (20) zur Regelung der Verbrennung durch die Verbrennungsvorrichtung (15) aufweist, durch die die Menge der auf dem Messbereich (10) haftenden Partikeln konstant gehalten wird.

9. Partikelsensorsystem nach Anspruch 8,
**dadurch gekennzeichnet,**
**dass** die Messvorrichtung (25) der Verbrennungsvorrichtung (15, 45) in Flussrichtung des Gasstrom (55) innerhalb des Partikelsensor (5) räumlich nachgelagert ist, so dass die Verbrennungsvorrichtung (15, 45) näher am Gaseinstrittsbereich des Partikelsensor (5) liegt als die Messvorrichtung (25).

## Claims

1. Method for continuously measuring particles in a gas stream (55), in particular soot particles, on a measuring region (10) of a particle sensor (5),
- the particles to be detected settling on the measuring region (10) of the particle sensor (5),
- the settled particles being burned by a partial regeneration of the measuring region (10) or the particles that are still located in the gas stream (55) being burned by a combustion device (15),
- the burning of the particles by the combustion device (15) being controlled by means of a control signal from a control unit (20), which is connected to a measuring device (25), in such a way that the amount of particles adhering to the measuring region (10) remains constant, and
- a signal variable of the particle sensor (5) being determined therefrom.

2. Method according to Claim 1,
**characterized**
**in that** the burning of the particles is performed in such a way that the particle sensor (5) is in the range of the percolation threshold.

3. Method according to Claim 1 or 2,
**characterized**
**in that** a physical variable of the combustion device (15) that leads to the controlled burning of the particles is used as the signal variable of the particle sensor (5).

4. Method according to one of Claims 1 to 3,
**characterized**
**in that** the burning is performed by a dielectric barrier discharge (DBD) or an exposure to heat of the combustion device (15).

5. Method according to Claim 4,
**characterized**
**in that** generation and operation of a DBD plasma (30) and measurement by the measuring device (25) are performed at frequency ranges that are different from one another.

6. Method according to Claim 4 or 5,
**characterized**
**in that** the power of a DBD plasma (30) is made to match the control signal by a varying cut-in frequency, burning time or voltage supply.

7. Particle sensor (5) for measuring particles, in particular for carrying out a method according to one of Claims 1 to 7, a measuring region (10) for the adherence of the particles to be detected, a measuring device (25) and a combustion device (15) being arranged in a distributed manner on one or more carrier elements (40a, 40b, 40c, 40d),
**characterized**
**in that** the particle sensor (5) has a control unit (20) for controlling the burning by the combustion device (15), by which the amount of particles adhering to the measuring region (10) is kept constant.

8. Particle sensor system for measuring particles, in particular for carrying out a method according to one of Claims 1 to 7, consisting of a particle sensor (5) and a control device (23) electrically connected to the particle sensor (5), the particle sensor (5) having a measuring region (10) for the adherence of the particles to be detected, a measuring device (25) and a combustion device (15) arranged in a distributed manner on one or more carrier elements (40a, 40b, 40c, 40d),
**characterized**
**in that** the control device (23) has a control unit (20) for controlling the burning by the combustion device (15), by which the amount of particles adhering to the measuring region (10) is kept constant.

9. Particle sensor system according to Claim 8,
**characterized**
**in that** the measuring device (25) is arranged spatially downstream of the combustion device (15, 45) in the direction of flow of the gas stream (55) within the particle sensor (5), so that the combustion device (15, 45) is closer to the gas inlet region of the particle sensor (5) than the measuring device (25).

## Revendications

1. Procédé de mesure en continu de particules dans un flux de gaz (55), notamment de particules de suie, sur une zone de mesure (10) d'un détecteur de particules (5), selon lequel
- les particules à détecter se déposent sur la zone de mesure (10) du détecteur de particules (5),
- les particules déposées sont brûlées par une régénération partielle de la zone de mesure (10) ou les particules qui se trouvent encore dans le flux de gaz (55) sont brûlées par un dispositif de combustion (15),
- la combustion des particules par le dispositif de combustion (15) étant régulée, par le biais d'un signal de régulation provenant d'une unité de régulation (20) qui est reliée à un dispositif de mesure (25), de telle sorte que la quantité des particules qui adhèrent sur la zone de mesure (10) reste constante, et
- une grandeur de signal du détecteur de particules (5) étant déterminée à partir de cela.

2. Procédé selon la revendication 1, **caractérisé en ce que** la combustion des particules est réalisée de telle sorte que le détecteur de particules (3) se trouve dans la zone du seuil d'infiltration.

3. Procédé selon la revendication 1 ou 2, **caractérisé en ce qu'**une grandeur physique du dispositif de combustion (15), laquelle donne lieu à une combustion régulée des particules, est utilisée en tant que grandeur de signal du détecteur de particules (5).

4. Procédé selon l'une des revendications 1 à 3, **caractérisé en ce que** la combustion est réalisée par une décharge empêchée de manière diélectrique (DBE) ou un effet calorifique du dispositif de combustion (15).

5. Procédé selon la revendication 4, **caractérisé en ce que** sont réalisées une génération et une utilisation d'un plasma DBE (30) ainsi qu'une mesure par le dispositif de mesure (25) en présence de plages de fréquences différentes l'une de l'autre.

6. Procédé selon la revendication 4 ou 5, **caractérisé en ce que** la puissance d'un plasma DBE (30) est mise en correspondance avec le signal de régulation par une fréquence de mise en marche, un temps de combustion ou une alimentation électrique variables.

7. Détecteur de particules (5) destiné à mesurer des particules, notamment destiné à mettre en oeuvre un procédé selon l'une des revendications 1 à 7, une zone de mesure (10) servant à l'adhérence des particules à détecter, un dispositif de mesure (25) et un dispositif de combustion (15) étant disposés de manière répartie sur un ou plusieurs éléments porteurs (40a, 40b, 40c, 40d), **caractérisé en ce que** le détecteur de particules (5) présente une unité de régulation (20) destinée à réguler la combustion par le dispositif de combustion (15), par le biais de laquelle la quantité des particules qui adhèrent sur la zone de mesure (10) est maintenue constante.

8. Système de détection de particules destiné à mesurer des particules, notamment destiné à mettre en oeuvre un procédé selon l'une des revendications 1 à 7, composé d'un détecteur de particules (5) et d'un contrôleur (23) relié électriquement avec le détecteur de particules (5), le détecteur de particules (5) présentant une zone de mesure (10) servant à l'adhérence des particules à détecter, un dispositif de mesure (25) et un dispositif de combustion (15) disposés de manière répartie sur un ou plusieurs éléments porteurs (40a, 40b, 40c, 40d), **caractérisé en ce que** le contrôleur (23) présente une unité de régulation (20) destinée à réguler la combustion par le dispositif de combustion (15), par le biais de laquelle la quantité des particules qui adhèrent sur la zone de mesure (10) est maintenue constante.

9. Système de détection de particules selon la revendication 8, **caractérisé en ce que** le dispositif de mesure (25) est monté, dans l'espace, à la suite du dispositif de combustion (15, 45) dans le sens de circulation du flux de gaz (55) à l'intérieur du détecteur de particules (5), de sorte que le dispositif de combustion (15, 45) se trouve plus près de la zone d'entrée du gaz du détecteur de particules (5) que le dispositif de mesure (25).
